# EUROPEAN PATENT APPLICATION

(11) **EP 2 000 749 A2**
(43) Date of publication of application: **10.12.2008**
(21) Application number: 08396009.6
(22) Date of filing: 04.06.2008
(51) Int. Cl.: F24J 2/05, F24J 2/12

(54) **Solar energy collector and method for manufacturing of a reflector profile**

(30) Priority: 04.06.2007 FI 20070441
(71) Applicant: Sämpi, Jouko, 28300 Pori (FI)
(72) Inventor: Sämpi, Jouko, 28300 Pori (FI)
(74) Representative: Nieminen, Taisto Tapani

(57) **Abstract**

A collector of the solar energy (1, 2) which comprises an oblong profile as a reflecting device, such as a parabolic profile (1), a collector pipe system (2) which is adjusted to be at the oblong focal line of the mentioned profile to which collector pipeline fluid circulation is arranged in such a way that the liquid becomes warm due to the radiation of the sun in the mentioned collector pipe system. The parabolic reflecting device (1) is made of a thin plate to a parabolic form in order to eliminate the profile change due to heat extension in such a way that the stiffeners (16) which maintain the mentioned profile form are formed of a thin plate itself by creating bendings to it against the profile direction in a vertical direction and that there is a glass pipe (4) as the outermost pipe of the collector pipe system (2) in which case the rays which come from the reflecting device even to the outer edges of this pipe change their direction essentially due to the light refraction inside of the pipe (4).

## Description

The invention relates to a solar energy collector which comprises an oblong profile as a reflecting device, such as a parabolic profile, a collector pipe system which is adjusted to an essentially oblong focal line of the mentioned profile and to which liquid circulation is arranged in such a way that the liquid becomes warm due to the radiation of the sun in the mentioned collector pipe system and the warmed up liquid is directed to release heat energy for example with the help of a heat exchanger for beneficial use.

Previously are known parabolic panels as collectors of the solar energy as round panel lenses, in which the energy is taken out centralized from the focal point of the panel and also as oblong series of panels in which case energy is taken out of the pipe which is located to go in the focal line of the reflections in the panels.

The disadvantage of the round panel is the fact its diameter has to be long so that the needed amount of the panels would not rise too high. Manufacturing of a round panel to be parabolic is expensive because the surface needs to be processed and for example with aluminium it loses its shimmer while being processed. The shimmer needs to be created to it later with some coating method. On the other hand the sizes of plates which are available also limit the size of the panel because manufacturing of the panel is quite impossible by joining several plates to each other in order to form an preform.

The disadvantage of oblong, parabolic panels is the fact that they stay parabolic and that they even create it. Parabolic profiles have been made for example out of several straight parallel lines of panels which all have been directed to the collector pipe. With this solution an accurate radiation concentration cannot be achieved to the collector pipe or then the diameter of the collector pipe then has to be longer than needed.

Also parabolic, oblong panels have been made of uniform plates which have a panel feature, look for example the publications US 4,296,737 and JP 56155333. The disadvantage of these is the fact that the bodies of the panels are made of some other material than the panel in which case the heat extension of the material has an effect on the panel and changes its parabolic form.

In order to eliminate the above mentioned disadvantages a new collector of the solar energy has been developed with the help of which the faults of the previous solutions can essentially be eliminated and it is characteristic for the collector according to the invention that the parabolic reflecting device is made of a thin plate in order to eliminate the change in profile caused by heat extension to a parabolic form in such a way that the stiffeners which maintain the mentioned profile form are formed of the thin plate itself by creating bendings to it against the profile direction in a vertical direction and in such a way that there is a glass pipe as the outermost pipe of the collector pipe system in which case the rays which are coming from the reflecting device and extending also to the outer edges of this pipe will change their direction essentially due to the light refraction to the inside area of the pipe.

It is characteristic for the manufacturing method of the collector according to the invention that the reflecting device, such as the shimmering thin plate is bent to have a parabolic profile form and a supporting body which maintains its form is formed for the reflecting device with the help of the thin plate itself by bending plate material at the parabolic state of the reflecting device from the longitudinal plate measurement of the device by using flattened handles which extend to the inner or the outer side of the reflecting device.

The advantage of the collector according to the invention and its manufacturing method is the fact that the collector can be made of a glossy thin plate without damaging its surface and when its body which stiffens and maintains collector form is made of the same material, the heat extension does not misshape at all the parabolic form of the collector. The collector becomes very light and turning of it according to the sun can be performed with small power. When the parabolic form of the collector is maintained in all situations, the diameter of the collector pipe which absorbs the radiation in the last resort does not have to be very long, for example 40 mm is enough to be its outer diameter and the rays can be directed to it. Disappearing of the heat from the collector pipe can easily be prevented with the help of an insulation arrangement to which a glass pipe as the outermost pipe belongs and another glass pipe inside it belongs and a vacuum between them. Accordingly change of the direction of the rays of the sun towards the inner part of the pipe system occurs due to the light refraction regarding the rays also touching the outermost pipe which improves the operating efficiency of the collecting.

In the following the invention is discussed more detailed by referring to the accompanying drawing, in which
- Figure 1: shows the collector profile and the collector pipe as a side view.
- Figure 2: shows the solution of the figure 1 equipped with ends.
- Figure 3: shows the collector pipe system as a crosscut drawing.
- Figure 4: shows the collector pipe system being partly cut and shown diagonally.
- Figure 5: shows the collector pipe system as a cut side view.
- Figure 6: shows the progressive manufacturing of the stiffeners of the reflecting profile.

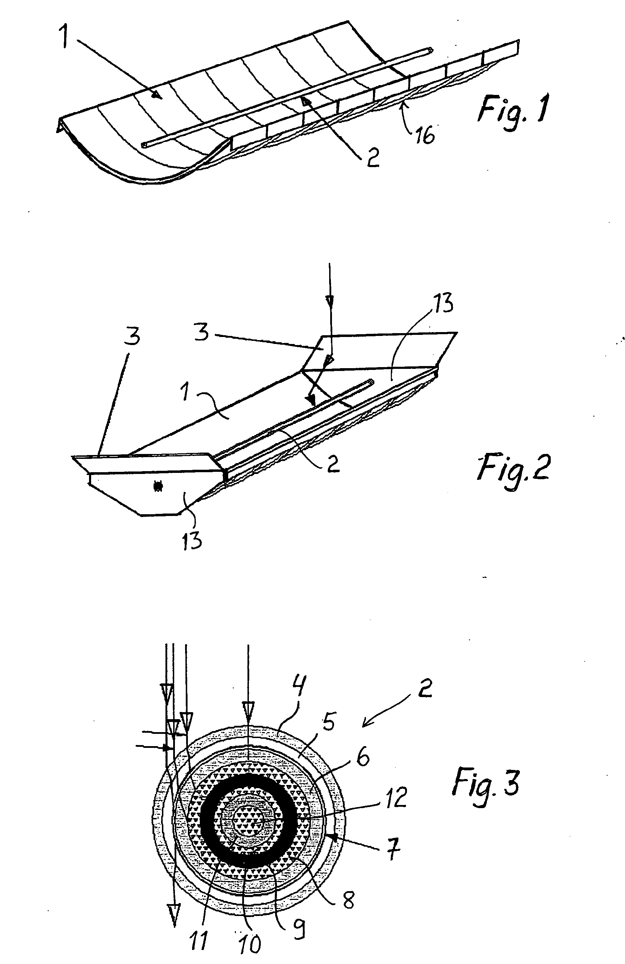

In the figure 1 there is a profile 1 bent to a parabolic arch form from a glossy thin plate which profile is made for example of glossy aluminium plate. There are stiffening handles 16 which have been pressed from the plate itself at the back side of the profile 1 when the board has firstly been bent to a parabolic arch form. With the help of the handles 16 the profile keeps its shape. The collector pipe 2 is located to the focal line of the profile.

In the figure 2 the ends 13 are attached to the profile 1. The ends and their extensions are also made of reflecting material and direct rays to the profile 1. The collector pipe 2 can be attached to the ends 13. With the help of the ends the whole unit can be supported for example to a body which takes care of the turning of the position of the collector according to the sun.

In the figure 3 a structure of a collector pipe system 2 is shown to which two glass pipes 4 and 6 belong as the outermost pipes. The glass of the outermost putki 4 is glass which lets long-wave heat radiation through, like quartz glass. The inner glass pipe 6 is a Duran-pipe to which the rays which have the longest waves are being absorbed. With the reference number 7 a circle - in other words the diagonal accuracy is shown with which accuracy the rays coming near the collector pipe still change their direction in the glass pipes 4 and 6 due to the light refraction at least to a liquid room 8 which is outside the black pipe 9.

The actual black pipe 9 has still an essentially shorter diameter and it also can have it because the radiation energy either stays in the black pipe 9 or in the liquid 8 which is around it while warming up them.

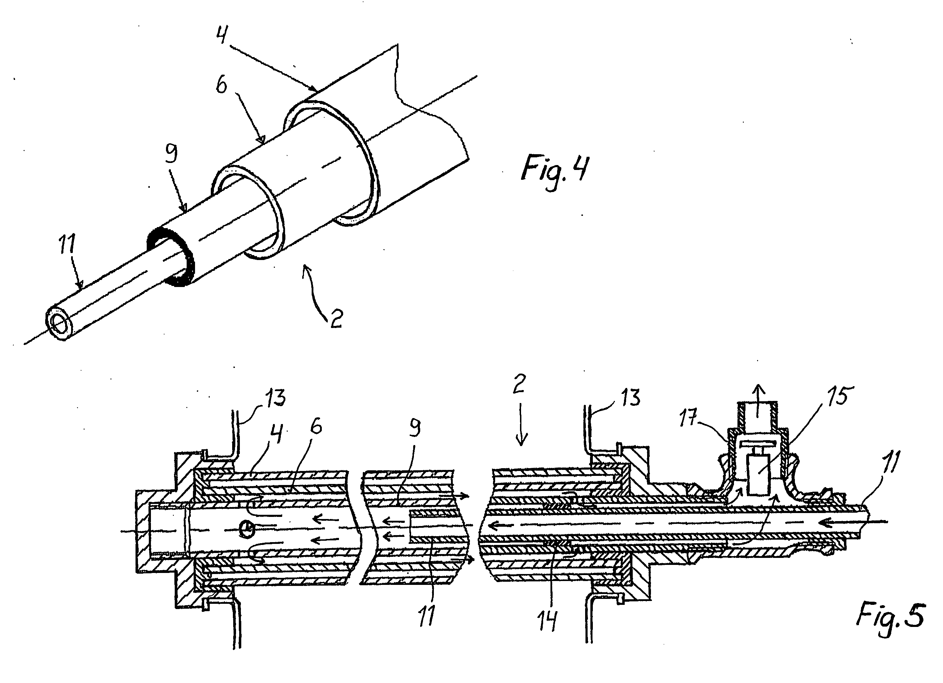

In the figure 4 there is the construction of the collector pipe 2 in which the pipes 4 and 6 are the glass pipes, the pipe 9 is the black pipe and the inlet pipe 11 is the pipe for the cold liquid to be fed within it.

In the figure 5 fluid circulation in the collector pipe 2 is shown. The liquid is fed through the pipe 11 into the black pipe 9. The pipe 11 stops extending inside the pipe 9 already during the first third of the distance. The liquid to be fed exists then in the innermost part of the collector pipe 2. The liquid can flow freely to the interstice of the pipe 11 and the pipe 9 all the way to the stuffing 14. In this interstice it does not move much and rather functions as an insulator. From the other end of the pipe system 2 through the holes of the black pipe 9 the liquid flows freely to the ring-like room outside the black pipe 9 in which it mainly becomes warmer and it flows away to the outer surface of the pipe 11 from the holes of the forepart of the black pipe 9 and through that removal unit 17 which is equipped with a thermostat 15. The liquid is circulated with the help of a pump (not shown). The pipe 11 can extend into the black pipe 9 to a distance of about 30 - 50 % from the forepart of the pipe.

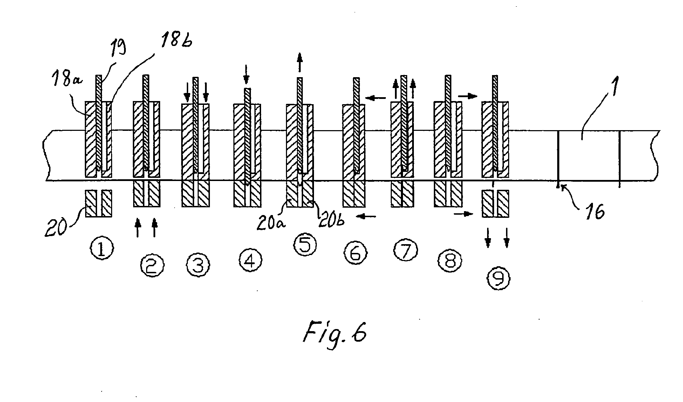

In the figure 6 the stiffening of the thin plate profile 1 which is bent to a parabolic form is shown with the help of handles 16 from the same thin plate. As tools there are the parts 18 and 19 which are inside the profile and the opposite part 20 which is at the opposite side of the profile are used. With the help of the steps 1 -9 the pleat to be - in other words - the flattened fold 16 is formed while being in a parabolic form outside the profile by folding and stretching the thin plate 1 while maintaining the parabolic form in order to achieve a fold which is about 15 - 20 mm high. The part 18 can be opened a little as parts 18a and 18b in such a way that the press 19 can be pressed to the thin plate between the parts and downwards [as much as] the measurement of the fold is, in the step 4. In the step 5 the press 19 is drawn away and the parts a and b of the opposite part 20 are pressed together in which case the fold becomes squeezed, in the steps 6 and 7. In the steps 8 and nine the tools are opened and are moved to the location of the new handle 16 to be formed. The handles 16 can be made, if wanted, also inside the profile, but the better option is to make them outside the profile.

The stiffening ribbing 16 can be of a uniform height or their height can be lowered at the location of the edges of the profile 1. This can be achieved with the help of the shape of the lower end of the press 19.

## Claims

1. A collector of the solar energy (1,2) which comprises an oblong profile as a reflecting device, such as a parabolic profile (1), a collector pipe system (2) which is adjusted to be at the oblong focal line of the mentioned profile to which collector pipeline fluid circulation is arranged in such a way that the liquid becomes warm due to the radiation of the sun in the mentioned collector pipe system and the warmed up liquid is directed to release heat energy for example with the help of a heat exchanger for beneficial use, **characterized in that** the parabolic reflecting device (1) is made of a thin plate to a parabolic form in order to eliminate the profile change due to heat extension in such a way that the stiffeners (16) which maintain the mentioned profile form are formed of a thin plate itself by creating bendings to it against the profile direction in a vertical direction and that there is a glass pipe (4) as the outermost pipe of the collector pipe system (2) in which case the rays which come from the reflecting device even to the outer edges of this pipe change their direction essentially due to the light refraction inside of the pipe (4).

2. A collector of the solar energy according to the claim 1, **characterized in that** the two outermost pipes (4, 6) of the collector pipe system are made of glass and that there is a vacuum between them.

3. A collector of the solar energy according to the claim 1, **characterized in that** there is a black pipe (9) inside the glass pipe (4) or the inner glass pipe (6) at the both sides of which there is a channel room for the liquid to be warmed.

4. A collector of the solar energy according to the claim 1, **characterized in that** the liquid to be warmed is fed into the black pipe (9) through a pipe (11) which is adjusted into the black pipe which pipe extends into the mentioned pipe (9) for a distance which is at least one third of the length of the black pipe.

5. A collector of the solar energy according to the claim 1, **characterized in that** the warmed up liquid is arranged to be removed from the ring-like room which is outside of the black pipe.

6. A collector of the solar energy according to the claim 1, **characterized in that** there are ends (13) which belong to the reflecting profiles through which or to the support of which the liquid pipe system (2) is adjusted.

7. A method for manufacturing a collector of the solar energy in which method solar energy is collected with the help of an oblong reflecting device (1) which comprises a parabolic profile form and with the help of an oblong, collector pipe system (2) in which liquid circulates and which is located to the focal line of the reflecting device, **characterized in that** the reflecting device, such as a shimmering thin plate is bent to a parabolic profile form and that a supporting body which maintains its shape is formed for the reflecting device with the help of the thin plate itself by bending plate material from the longitudinal plate measurement of the device at the parabolic state of the reflecting device by using flattened ribbings (16) which extend to the inner or the outer side of the reflecting device.

8. A method according to the claim 7, **characterized in that** the ribbing (16) is bent to a standard height covering the whole parabolic arch.

9. A method according to the claim 7, **characterized in that** the ribbing (16) is bent to be higher at the midpoint of the arch than at the edge parts of the arch.
